# EUROPEAN PATENT SPECIFICATION

(11) **EP 3 671 503 B1**
(45) Date of publication and mention of the grant of the patent: **06.09.2023**
(21) Application number: 19218246.7
(22) Date of filing: 19.12.2019
(51) Int. Cl.: H04L 9/40, G06F 21/32, G06F 21/62, G06F 21/64, H04L 9/32, G06F 21/36

(54) **GRAPHOMETRIC DOCUMENT SIGNING METHOD AND SYSTEM**
VERFAHREN UND SYSTEM ZUM GRAPHOMETRISCHEN UNTERSCHREIBEN VON DOKUMENTEN
PROCÉDÉ ET SYSTÈME DE SIGNATURE DE DOCUMENTS GRAPHOMÉTRIQUES

(30) Priority: 20.12.2018 IT 201800020452
(43) Date of publication of application: 24.06.2020
(73) Proprietor: Olivieri, Benedetto, 03043 Cassino (FR) (IT)
(72) Inventor: Olivieri, Benedetto, 03043 Cassino (FR) (IT)
(74) Representative: Fiammenghi, Eva

(56) References cited:
- EP-A1- 1 280 098
- US-A1- 2003 012 374
- US-A1- 2010 169 651
- US-A1- 2014 298 013

## Description

### Field of the invention

The present invention relates to the management of electronic documents and, in particular, to the graphometric signature of a user and to the system and method for affixing said signature in a secure manner so as to ensure traceability to the identity of the signatory and, at the same time, the non-repudiability of the affixed signature. In a further aspect, the recognition of the signatory is reinforced with face identification.

In a further aspect, the present invention relates to a mobile application for use in mobile devices, suitable to manage the graphometric signature of a document.

### Prior art

At present, the digitisation of the documents which require affixing a signature by a signatory, typically contract-type documents, requires first printing on paper and subsequent digitisation, for example by scanning, with insertion into a document system. A process of the aforementioned type may render invalid the handwritten signatures affixed on the paper document, since the acquisition by means of documentary scanning does not guarantee the non-repudiability of the affixed signature.

Furthermore, the signed and acquired documents do not allow to carry out subsequent processing and integration.

To enable better management of electronic (or digital) documents in which a user's signature is required, advanced electronic signature techniques based, for example, on symmetric or asymmetric key cryptography and the use of a public key can be used.

Electronic signatures are well known for the protection and authentication of electronic documents and they substantially correspond to an electronic code attached to or associated with a document that allows the verification of the identity of the signatory of the document and the impossibility of modifying after the signature has been affixed.

A common example of an electronic signature, commonly known as a digital signature, is based on public-key cryptography and hash functions for providing this verification. The use of the aforementioned digital signature allows to optimise the electronic management of the documents, without the need for subsequent scans during the signature affixation step, and to guarantee, at least theoretically, the non-repudiability of the affixed signature. However, the affixation of the signature is designated to the use ad hoc recognition devices, for example *a smart card* containing the asymmetric signature key of the user, which could however be used without the actual consent of the owner.

The closest existing patent covering the same topics and providing partial solutions to the problems here exposed is EP1280098A1, which discloses an electronic signing method and system that protects the authenticity and integrity of the document whit a capturable identifier such as, for example, the normal hand signature. Also other systems have been implemented such as the one in patent US2003012374A1, and others are commonly used in the market. However, the novelty that we introduce in the present application is composed by both a better formalisation of the steps of a digital signing systems and the addition of an authentication of the signatory through biometric solutions. The documents cited in fact, use the digital signature as an authentication method for the document signed, but the first signature cannot be authenticated to the actual person signing, and in subsequent signing operations this identity is never verified anymore. On the other hand a facial recognition is easily verifiable the first time with existing methods and a comparison with an official ID document, thus allowing the deposit of the first signature and the following signatures to be re-authenticated with a much safer and stronger process.

It would therefore be desirable to have an electronic document signing method and system capable of minimising the drawbacks outlined above. In particular, it would be desirable to have a method and a system for graphometric signature of documents capable of ensuring optimum electronic document management and guaranteeing the identity of the signatory and, at the same time, the non-repudiability of the affixed signature.

### Summary of the invention

An object of the present invention is to provide a method for graphometric signature of documents capable of minimising the aforementioned problems.

Another object of the present invention is to provide a method for graphometric signature of documents capable of guaranteeing the identity of the signatory at the time of affixing of the electronic signature.

Lastly, an object of the present invention is to provide a method for graphometric signature of documents that ensures the non-repudiability of the affixed electronic signature affixed.

The objects mentioned above are achieved by a method for graphometric signature of documents according to the attached claims.

The method for graphometric signature of documents comprises the steps of:
- authentication of a signatory to the graphometric signature;
- access to a document to be signed;
- authentication of the graphometric signature of the signatory;
- authentication of the identity of the signatory;
- affixing of the graphometric signature of the signatory to the document to be signed in case of positive authentication of the graphometric signature and the signatory;
- encryption of the document provided with the affixed graphometric signature;

wherein the method for graphometric signature is characterised in that the step of authenticating the graphometric signature of signatory comprises the steps of:
   - acquisition of the graphometric signature of the signatory by means of a device for dynamic acquisition of the graphometric signature;
   - identification of one or more actual features of the graphometric signature;
   - retrieval of the pre-stored features of the graphometric signature from a database;
   - comparison of the actual features with the pre-stored features of the graphometric signature by means of an authentication engine;
wherein the step of authenticating the identity of the signatory comprises the steps of:
   - real-time acquisition of the actual face recognition identifiers of the signatory by means of a face recognition device;
   - retrieval of the pre-stored face recognition identifiers of the signatory from the database, wherein the pre-stored face recognition identifiers are obtained by scanning a photo from an identification document of the signatory;
   - comparison of the actual face recognition identifiers with the pre-stored face recognition identifiers by means of the authentication engine;
wherein the database comprises the associations between said pre-stored features of the graphometric signature and the pre-stored face recognition identifiers of one or more signatories, and
wherein the step of affixing the graphometric signature is performed if in the step of comparing the step of authenticating the graphometric signature, the actual features correspond to the pre-stored features of the signatory, and if in the step of comparing the identity authentication step, the actual face recognition identifiers correspond to said pre-stored face recognition identifiers of the signatory.

Thus, the aforementioned method allows to guarantee the identity of the signatory before the affixing of the electronic signature, at the same time maintaining the characteristic of non-repudiability of the affixed electronic signature.

Scanning the photo of the identification document as a pre-stored biometric identifier allows to speed up and optimise the signatory biometric identification step, while ensuring identification through the government body that issued the document.

Preferably, the actual features the graphometric signature comprise the acquisition of the pressure and/or speed and/or trait of the signatory and the pre-stored features comprise the pressure and/or speed and/or trait stored for the signatory.

Preferably, the encryption step comprises the steps of:
- splitting the document into a plurality of data packets;
- encryption of each of the data packets by means of a predefined encryption algorithm;
- sending data packets in non-sequential mode.

Even more preferably, the step of sending data packets is carried out by sending the data packets to a single server.

Alternatively, the step of sending data packets is carried out by sending the data packets to a plurality of separate servers.

Thus, the encryption allows to ensure that the data contained in or associated with the document, including the affixed graphometric signature, cannot be modified, guaranteeing the subsequent non-repudiability thereof.

Preferably, the method comprises the step of applying a timestamp to the graphometric signature after the step of encrypting the document.

Thus, clearly identifying the instant in which the electronic signature was affixed. Preferably, the method further comprises the step of applying an image to the document provided with the graphometric signature before the step of encrypting the document or before the step of affixing the graphometric signature.

This allows to add a distinctive sign of the signatory, for example a company logo or stamp. The aforementioned objects are further attained by a computer program, for example an application for mobile devices, according to the attached claims.

The computer program comprising a computer code which, when loaded in a computer, allows the computer to carry out the steps of method for graphometric signature of documents according to one or more of the attached claims.

Lastly, the aforementioned objects are further attained by an electronic document signing system.

The system for graphometric signing of documents comprises:
- one or more mobile data processing devices each provided with at least one face recognition device, a screen, a graphometric signature acquisition device, a local database, and data processing means;
- at least one server provided with at least one central database and operatively connected to the mobile data processing devices;

wherein the data processing means of the mobile data processing devices comprise a computer program which, when loaded, allows the mobile data processing devices to carry out all the steps of the method for graphometric signature of documents according to one or more of the attached claims,
wherein the local database comprises the data relating to the pre-stored features of the graphometric signature and to the pre-stored face recognition identifiers of the signatory, and wherein the central database comprises the data relating to the authentication of the signatory of the graphometric signature and it is suitable to store the encrypted documents provided with the graphometric signature.

The graphometric document signature system therefore allows all operations to be carried out to fully define the graphimetric signature by means of a single mobile data processing device, for example a tablet or a smartphone, ensuring that the signatory is actually the owner of the graphometric signature to be affixed.

### Description of the figures

These and further characteristics and advantages of the present invention will become apparent from the description of the preferred embodiment, illustrated by way of non-limiting example in the attached figures, wherein:
- Figure 1 is a schematic view of the document graphometric signature system, according to the present invention;
- Figure 2 is a schematic view of the documents graphometric signature method, according to the present invention.

### Detailed description of the invention

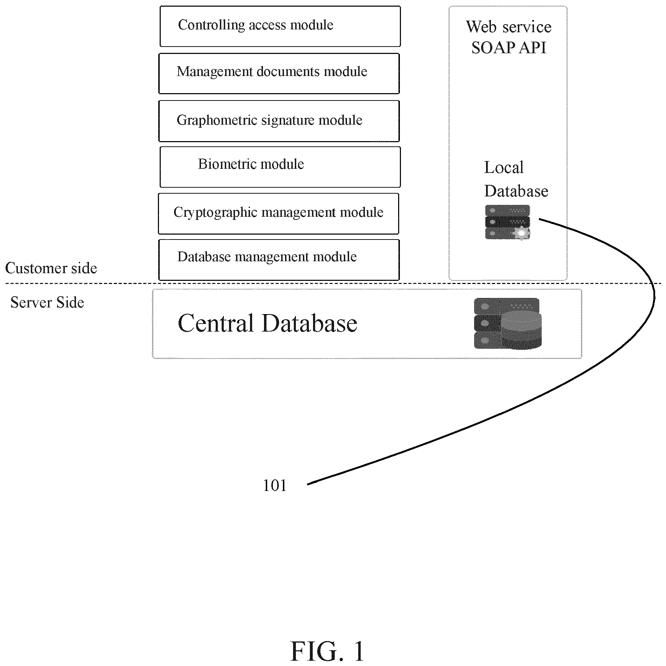

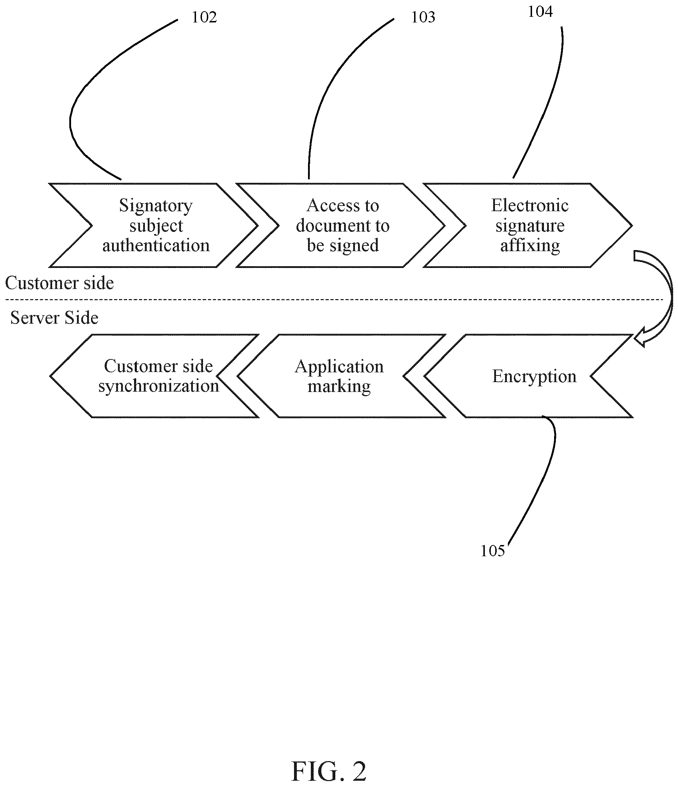

With reference to Figures 1 and 2, the method and system for graphometric signature of documents are described hereinafter, according to the present invention.

In the present invention, the term *"graphometric signature*" is intended to mean an electronic signature method carried out with a manual gesture entirely similar to the handwritten signature on paper, wherein the signature data is acquired by means of a device capable of dynamically acquiring the movement of a stylus actuated directly by the hand of the signatory on a sensitive surface, thereby emulating the handwritten signature that can be affixed by means of a pen on the paper.

In particular, the graphometric signature object of the present invention relates to the method of advanced graphometric electronic signature, in which the data of the acquired signature are univocally associated to the document that the signatory subject of signature signs and encrypted to make them inaccessible for use with other documents.

The signature associated with the document can then be verified, if repudiated, by a graphologist who examines it exactly as in the paper case.

It is assumed, therefore, that it is necessary to affix a signature on a contractual document avoiding printing and subsequent scanning, or ensuring that the signature on an electronic document is not repudiable.

The aforementioned method for graphometric signature of documents will therefore be described hereinafter with reference to the use of a document graphometric signature system according to the present invention.

The document graphometric signature system comprises one or more mobile data processing devices, defining the customer side of the system, suitable to be operatively connected to a central server, defining the server side of the system, shown by way of example in Figure 1. Mobile data processing devices may be defined, for example, by a tablet or smartphone, and each is provided with at least one face recognition device, a screen, a graphometric signature acquisition device, a local database, and data processing means.

Said mobile data processing devices could be further provided with at least one device for acquiring one or more biometric identifiers.

In the embodiment described therein, the face recognition device comprises a camera capable of photographically acquiring the face of the signatory. Furthermore, according to further embodiments, not described in detail hereinafter, the device for acquiring one or more biometric identifiers may comprise devices capable of acquiring, for example, the retina, the voice, the fingerprints.

The device for acquiring the graphometric signature consists of the same screen suitable for displaying the document, in which the capacitive or resistive technology is capable of identifying the distinctive elements of the affixed graphometric signature, for example, the pressure and/or the speed and/or the trait of said signatory.

The local database comprises data relating to the pre-stored features of the graphometric signature and the pre-stored face recognition identifiers of the signatory, as described in greater detail in the definition of the modules forming the mobile application of the mobile data processing device.

In addition, the local database may include data regarding any pre-stored biometric identifiers of the signatory.

The data processing means of the mobile data processing device comprises a computer program, which can be displayed as a mobile application for the signatory. Said computer program comprises a computer code which, when loaded by the processing means, allows the mobile data processing device to carry out all the steps of the method for graphometric signature of documents according to the present invention. In particular, the mobile application consists of a plurality of modules, including:
- A module for managing calls to external systems such as the centralised server database or a CRM module. The data that is exported to the external are encrypted and split according to a protocol preferably of the proprietary type. For security, APIs use an authentication mechanism to prevent improper use thereof by unauthorised users.
- A module for encrypting System Files on the server, suitable for creating secure folders on the disc, and automatically encrypt and decrypt the files contained therein. Creates individual protected files and automatically accesses them through encryption functions. The encryption keys can be managed independently by the system without the intervention of the signatory.
- A module for encrypting sensitive data on the central database of the server suitable to manage the block encryption algorithm of sensitive data.
- A module for encrypting the local database of the mobile data processing device, suitable to manage all the data to be stored and post processed by the system. The data can be either sensitive or management of signature flows. Graphometric data is also stored in the local database. The database is preferably not accessible by the signatory.
- A module for controlling access and the relative permissions and profiles for the step of authenticating the person signing the graphometric signature, suitable to manage access control to the mobile data processing device. Each user is granted access through the central database of the server, or the connection to a CRM through the same server, where credentials are defined for authentication, for example the user name and password. Each user that is created and stored on the central database of the server has a personal profile with authorisations to the various modules of one or more mobile data processing devices.
- Document composition management module. This module allows to assemble in a single document both the documents to which the graphometric signature has been affixed and the documents to which no graphometric signature has been affixed. After the composition procedures, the signatory may sign the generated document. The composition procedure is performed visually, for example by dragging documents from a list into a composition section, and when the composition is complete, the system gathers all the documents into a single document for the affixing of a single graphometric signature. The form also offers the possibility to delete documents.
- A module for the management of the graphometric signature, suitable to allow the signatory to affix the graphometric signature on one or more pages of the document. The module allows sequentially scroll the pages and also an affix an image, for example a stamp previously acquired with the camera.
- A module for detecting data from identification documents, such as identity cards and health cards for transformation into digital data. Documents can also be processed using Optical Character Recognition for the text/characters contained therein. The detected text is then stored and added into the flow masks for data entry. The recognition process is based on acquiring text images and then applying a series of filters to extract a normalised image. After that the process passes the image obtained in the character recognition algorithm. The algorithm has an image as input and a digitised text as output.
- A module for detecting the data required for recognising the face of the signatory, adapted to detect facial recognition identifiers. The recognition algorithm analyses two types of Photos. The first is the one relating to the identification document while the second photo is acquired in real time by the camera of the mobile data processing device. After taking the photo, the process of normalising the two photos begins and the detection, for example of 21 facial points (areas, points, and shapes), for verification, starts. The algorithm calculates the percentage of similarity between the two photos by validating them if that percentage is within a predefined range.
- A module for managing files stored in the file system and to ensuring that the files present in the file system are always relevant to the authenticated signatory on the mobile data processing device. The above files can be deleted on request (from a special mask the signatory can delete/clean both the file system and the data present in the local database of the mobile data processing device). All files and data generated by a signatory are automatically deleted from the present module when a different signatory accesses the same mobile data processing device.

The server is preferably created by a data processing device provided with at least one central database but could alternatively be provided with a plurality of central databases or be defined by a plurality of separate data processing devices constituting a cloud-type server. As described previously, the central database comprises the data relating to the authentication of the signatory of the graphometric signature and it is suitable to store the encrypted documents provided with the graphometric signature.

The server can further carry out the operations for the encryption of the signed document and allow the affixing of a timestamp downstream of the aforementioned encryption step, as illustrated in Figure 2.

The document graphometric signature system therefore allows all operations to be carried out to fully define the graphometric signature by means of a single mobile data processing device ensuring that the signatory is actually the owner of the graphometric signature to be affixed. Therefore, the system and method according to the present invention allow to maintain the validity of the graphiometric signatures affixed to the documents, also allowing the processing of the documents to be signed. Moreover, the use of a single mobile data processing device allows the signatory to maintain direct control of the documents to be signed, for example by viewing the documents and affixing the graphometric signature in any portion of the same documents. Lastly, the real-time acquisition of the actual face recognition identifiers of the signatory and the retrieval of the pre-stored face recognition identifiers of the signatory from the database with the data obtained from scanning a photo from an identification document of the signatory allows the verification of the actual presence of the person approved to affix the graphometric signature.

In the state of the art, the systems that manage the affixing of the graphometric signature use signature acquisition devices of the graphic tablet type that do not allow to view the document to be signed by the signatory, therefore the graphometric signature can be affixed only on appropriate pre-defined portions of the document. Furthermore, the aforementioned devices do not allow to acquire in real time, and therefore to add any images such as stamps to the document.

The method for graphometric signature of documents according to the present invention, illustrated by way of example in Figure 2, allows to overcome the aforementioned problems and it comprises the steps of:
- authentication of the signatory to the graphometric signature;
- access to a document to be signed;
- authentication of the graphometric signature of the signatory;
- authentication of the identity of the signatory;
- affixing of the graphometric signature of the signatory to the document to be signed;
- encryption of the document provided with the graphometric signature.

The aforementioned method is preferably carried out by means of a computer program, as described above, obtained by means of a mobile application for the mobile data processing device. Thus, such mobile application allows to fill out and affix legally recognisable signatures on electronic documents and in full mobility.

The mobile application was created with the aim of allowing the signatory to electronically sign electronic documentation, from a simple page or multiple pages. In particular, the mobile application must ensure the integrity of the documents to be signed, the absolute traceability to the identity of the signatory and, at the same time, the non-repudiability of the affixed electronic signature. In this manner, it is possible to guarantee the graphometric signature, affixed by means of a mobile application, the same legal value of paper documents provided with a handwritten signature. In this manner, the aforementioned mobile application is able to comply with, for example, the Italian law relating to the Italian Decree of the President of the Council of Ministers dated 22 February 2013 published in the Official Gazette n° 117 on 21 May 2013.

Since the mobile data processing device is preferably a tablet or smartphone equipped with a stylus, the aforementioned mobile application is preferably made by means of software installable by means of an APK in Android environment.

The mobile application is capable of interacting with external systems by means of secure communication and data transfer protocols, of the known type and therefore not described further hereinafter, and it can have functionalities useful to speed up the acquisition of data, names or values present on documents, using an optical character Recognition (OCR) tool. Such data recognition and acquisition functionalities can also be performed on identification documents of the signatory, ensuring the correct identification and subsequent use of personal data.

The mobile application is capable of communicating and exchanging data with external systems via web service in a secure and encrypted way, using a predefined data communication protocol with encrypted connection with asymmetric key (asymmetric encryption).

According to further embodiments, the mobile application can communicate and exchange data with external systems via web service using a data communication protocol with encrypted connection with symmetric key (symmetric encryption).

The screen of the mobile data processing device is therefore able to display the mobile application and all the subsequent steps required to carry out the aforementioned method. In particular, once the mobile application is started, the signatory must proceed with the first step of authenticating the signatory of the graphometric signature. As described above, the central database comprises the data relating to the authentication of the signatory of the graphometric signature. As a matter of fact, each user is granted access through the central database of the server, or the connection to a CRM through the same server, where credentials are defined for authentication, for example the user name and password. Each user that is created and stored on the central database of the server has a personal profile with authorisations to the various modules of one or more mobile data processing devices. Thus, the user registered and approved to use the mobile data processing device will be capable of successfully completing the aforementioned first authentication step. In particular, data relating, for example, to the user name and password entered in the fields of the mobile application are sent to the server for user verification, which server will allow access to the subsequent steps.

In the next step, the signatory accesses the documents to be signed, then selects one or more documents and possibly one or more pages to on which the signature is to be affixed. The mobile application has a signature area where the selected document is loaded in its entirety and displayed for use by the signatory. Documents are displayed via the screen of the mobile data processing device. Thus, the additional functionalities of the mobile application therefore allow the signatory to choose which parts of the electronic document to sign electronically. Preferably, the method further comprises the step of applying an image to the document provided with the graphometric signature before the step of encrypting the document or before the step of affixing the graphometric signature. This allows to add a distinctive sign of the signatory, for example a company logo or stamp. In this connection, the mobile application allows to acquire a real-time image, for example by means of the camera of the mobile data processing device, the same camera that defines the device for acquiring one or more facial recognition identifiers as described hereinafter. The acquired image may be resized and affixed to any part and/or parts of the electronic document, and previously acquired images can be further affixed.

The screen of the mobile data processing device acts as a device for acquiring the graphometric signature, preferably by using a stylus capable of simulating the handwritten signature.

In order to allow the execution of the aforementioned steps of the graphometric signature method, the graphometric signature method implements, by means of the mobile application, the step of authenticating the graphometric signature of the signatory and the step of authenticating the identity of the signatory with a plurality of steps.

In particular, in the step of authenticating the graphometric signature of the signatory, the following steps are performed:
- acquisition of the graphometric signature of the signatory by means of a device for dynamic acquisition of the graphometric signature;
- identification of one or more actual features of the graphometric signature;
- retrieval of the pre-stored features of the graphometric signature from a database;
- comparison of the actual features with the pre-stored features of the graphometric signature by means of an authentication engine.

The signatory is free to affix the sign in any area of the document within the screen of the mobile data processing device, preferably by means of a stylus allowing a dynamic acquisition of the graphometric signature. In particular, during the acquisition of the aforementioned graphometric signature, data relating to the pressure and/or speed and/or trait of the signature are detected. Such data, i.e. the actual features of the graphometric signature, must therefore be compared with the pressure and/or speed and/or trait data, i.e. said pre-stored features, acquired and validated during the step of approving the user signatory of the system. The comparison step does not need to be connected to the server since, as described above, the aforementioned pre-stored features are contained in the local database of the mobile data processing device, to which the mobile application can access in a secure manner. Furthermore, in order to ensure and ensure the integrity of the document, absolute traceability to the identity of the signatory and, at the same time, the non-repudiability of the affixed graphometric signature, the following steps are carried out during the step of authenticating the identity of the signatory:
- acquisition of one or more actual face recognition identifiers of the signatory by means of a face recognition device;
- retrieval of the pre-stored face recognition identifiers of the signatory from the database;
- comparison of the actual face recognition identifiers with the pre-stored face recognition identifiers by means of the authentication engine.

Preferably, the actual face recognition identifiers comprise the acquisition of the physiognomy of the face of the signatory and the pre-stored face recognition identifiers comprise the scanning of a photo from an identification document of the signatory. The mobile application allows to recognise the signatory using the Face Recognition technique, using the camera integrated in the mobile data processing device. In this manner, the photo present on the identification document, also acquired and validated during the step of approving the user signatory of the system, can be cross-checked with the acquisition of the face of the signatory in real time. Thus, scanning the photo of the identification document to obtain the pre-stored face recognition identifiers allows to speed up and optimise the step of identifying the signatory while ensuring identification through the government body that issued the document. Thus, the local database of the mobile data processing device comprises the associations between the pre-stored features of the graphometric signature and the pre-store face recognition identifiers of one or more of the signatories.

In order to allow the correct affixing of the graphometric signature in the document, the step of affixing the graphometric signature is performed if in the step of comparing the step of authenticating the graphometric signature, the actual features correspond to said pre-stored features of the signatory, and if in the step of comparing the identity authentication step, the actual face recognition identifiers correspond to the pre-stored face recognition identifiers of the signatory.

Thus, the aforementioned method allows to guarantee the identity of the signatory before the affixing of the graphometric signature, at the same time maintaining the characteristic of non-repudiability of the affixed graphometric signature.

Following the affixing of the graphometric signature, the electronic document provided with the graphometric signature is encrypted, the encryption step including the following step:
- splitting the document into a plurality of data packets;
- encryption of each of the data packets by means of a predefined encryption algorithm;
- sending data packets in non-sequential mode.

Thus, the electronic document divided into data packets is encrypted according to a proprietary algorithm and sent to the server still in encrypted mode and preferably with non-sequential data packets.

Alternatively, the step of sending the data packets can be carried out by sending the data packets to a plurality of separate servers, and then be assembled at a later time for displaying the signed electronic document.

Thus, the encryption allows to ensure that the data contained in or associated with the document, including the affixed graphometric signature, cannot be modified, guaranteeing the subsequent non-repudiability thereof.

Preferably, the method according to the present invention further comprises the step of applying a timestamp to the graphometric signature before the step of encrypting the document. This allowing to clearly identify the moment when the graphometric signature was affixed and therefore maintaining the non-repudiability of the signed electronic document.

In a further embodiment, the server is defined by one or more ISO27001 certified data processors, which allow the use of the method and system subject of the present invention as an Electronic Health File, where the sensitivity of the data assumes a particular importance. Thus, the method and system for graphometric signature of documents according to the present invention have a plurality of advantages including the absence of paper prints of the document to be signed and the traceability of the data entered into the documents in electronic format. Furthermore, they are capable of guaranteeing the recognition of the signatory, for example by identifying the face with respect to the identifiers obtained from an identification document, as well as the maintenance of the non-repudiability characteristic of the affixed graphometric signature.

## Claims

1. Computer implemented method for graphometric signature of documents comprising the steps of:
- authentication of a signatory to said graphometric signature
- access to a document to be signed in case of positive authentication of said signatory;
- authentication of the graphometric signature of said signatory;
- affixing of the graphometric signature of said signatory to said document to be signed in case of positive authentication of the graphometric signature and the signatory;
- encryption of the document provided with said affixed graphometric signature;
wherein said step of authenticating the graphometric signature of said signatory comprises the steps of:
- acquisition of the graphometric signature of said signatory by means of a device for dynamic acquisition of said graphometric signature;
- identification of one or more actual features of said graphometric signature;
- retrieval of the pre-stored features of said graphometric signature from a local database;
- comparison of the actual features with the pre-stored features of said graphometric signature by means of a digital authentication engine;
wherein said step of authenticating said signatory comprises the steps of
- real-time acquisition of the actual face recognition identifiers of said signatory by means of a face recognition device;
- retrieval of the pre-stored face recognition identifiers of said signatory from said database, wherein said pre-stored face recognition identifiers are obtained by scanning a photo from an identification document of said signatory;
- comparison of said actual face recognition identifiers with said pre-stored face recognition identifiers by means of said authentication engine;
wherein said database comprises the associations between said pre-stored features of said graphometric signature and said pre-stored face recognition identifiers of one or more signatories, and
wherein said step of affixing the graphometric signature is performed if in said step of comparing in said step of authenticating the graphometric signature, said actual features correspond to said pre-stored features of said signatory, and if in said step of comparing in said signatory authentication step, said actual face recognition identifiers correspond to said pre-stored face recognition identifiers of said signatory.

2. Method for graphometric signature of documents according to claim 1, wherein the actual features of said graphometric signature comprise the acquisition of the pressure and/or speed and/or trait of said signatory and said pre-stored features comprise the pressure and/or speed and/or trait stored for said signatory.

3. Method for graphometric signature of documents according to one or more of claims 1 to 2, wherein said step of encryption comprises the steps of:
- splitting the document into a plurality of data packets;
- encryption of each of the data packets by means of a predefined encryption algorithm;
- sending data packets in non-sequential mode.

4. Method for graphometric signature of documents according to claim 3, wherein said step of sending data packets is performed by sending said data packets to a single server.

5. Method for graphometric signature of documents according to claim 3, wherein said step of sending data packets is performed by sending said data packets to a plurality of separate servers.

6. Method of graphometric signature of documents according to one or more of claims 1 to 5, further comprising the step of applying a timestamp to said graphometric signature after said step of encrypting the document.

7. Method of graphometric signature of documents according to one or more of claims 1 to 6, further comprising the step of applying an image to said document provided with said graphometric signature before said step of encrypting the document or before said step of affixing the graphometric signature.

8. Computer program comprising a computer code which, when loaded in a computer, allows the computer to carry out the steps of said method for graphometric signature of documents according to one or more of claims 1 to 7.

9. System for graphometric signing of documents comprising:
- one mobile data processing device provided with at least: one face recognition device used for said signatory authentication step in claim 1, a screen for user interaction during the steps of said method in claim 1, a device for dynamic acquisition of a graphometric signature, a local database for storing authentication features, and a digital authentication engine for performing the calculations related to the method in claim 1;
- at least one server provided with at least one central database and operatively connected to said mobile data processing device;
wherein said digital authentication engine of said mobile data processing device includes a computer program which, when loaded, allows said mobile data processing device to carry out all the steps of said method for graphometric signature of documents according to one or more of claims 1 to 7,
wherein said local database comprises the data relating to said pre-stored features of said graphometric signature and to said pre-stored face recognition identifiers of said signatory, and
wherein said central database comprises the data relating to said authentication of the signatory of said graphometric signature and stores the encrypted documents provided with said graphometric signature.

## Patentansprüche

1. Computerimplementiertes Verfahren für graphometrische Unterschrift von Dokumenten, das die folgenden Schritte aufweist:
- Authentifizierung eines Unterzeichners der graphometrischen Unterschrift;
- Zugriff auf ein zu unterzeichnendes Dokument im Falle einer positiven Authentifizierung des Unterzeichners;
- Authentifizierung der graphometrischen Unterschrift des Unterzeichners;
- Anbringen der graphometrischen Signatur des Unterzeichners auf dem zu unterzeichnenden Dokument im Fall einer positiven Authentifizierung der graphometrischen Signatur und des Unterzeichners;
- Verschlüsselung des mit der angebrachten graphometrischen Unterschrift versehenen Dokuments;
wobei der Schritt des Authentifizierens der graphometrischen Unterschrift des Unterzeichners die folgenden Schritte aufweist:
- Erfassung der graphometrischen Unterschrift des Unterzeichners mittels einer Einrichtung zur dynamischen Erfassung der graphometrischen Unterschrift;
- Identifizierung von einem oder mehr tatsächlichen Merkmalen der graphometrischen Unterschrift;
- Abruf der vorab gespeicherten Merkmale der graphometrischen Unterschrift von einer lokalen Datenbank;
- Vergleich der tatsächlichen Merkmale mit den vorab gespeicherten Merkmalen der graphometrischen Unterschrift mittels einer digitalen Authentifizierungsmaschine;
wobei der Schritt des Authentifizierens des Unterzeichners die folgenden Schritte aufweist:
- Echtzeit-Erfassung der tatsächlichen Gesichtserkennungsidentifizierungszeichen des Unterzeichners mittels einer Gesichtserkennungseinrichtung,
- Abruf der vorab gespeicherten Gesichtserkennungsidentifizierungszeichen des Unterzeichners von der Datenbank, wobei die vorab gespeicherten Gesichtserkennungsidentifizierungszeichen durch Scannen eines Fotos aus einem Identifikationsdokument des Unterzeichners gewonnen werden;
- Vergleich der tatsächlichen Gesichtserkennungsidentifizierungszeichen mit den vorab gespeicherten Gesichtserkennungsidentifizierungszeichen mittels der Authentifizierungsmaschine;
- wobei die Datenbank die Zuordnungen zwischen den vorab gespeicherten Merkmalen der graphometrischen Unterschrift und den vorab gespeicherten Gesichtserkennungsidentifizierungszeichen von einem oder mehr Unterzeichnern aufweist, und
- wobei der Schritt des Anbringens der graphometrischen Unterschrift durchgeführt wird, wenn in dem Schritt des Vergleichens in dem Schritt des Authentifizierens der graphometrischen Unterschrift die tatsächlichen Merkmalen den vorab gespeicherten Merkmalen des Unterzeichners entsprechen, und wenn in dem Schritt des Vergleichens in dem Unterzeichner-Authentifizierungsschritt die tatsächlichen Gesichtserkennungsidentifizierungszeichen den vorab gespeicherten Gesichtserkennungsidentifizierungszeichen des Unterzeichners entsprechen.

2. Verfahren für graphometrische Unterschrift von Dokumenten nach Anspruch 1, wobei die tatsächlichen Merkmale der graphometrischen Unterschrift die Erfassung des Drucks und/oder der Geschwindigkeit und/oder des Wesenszug des Unterzeichners aufweisen und die vorab gespeicherten Merkmalen den Druck und/oder die Geschwindigkeit und/oder den Wesenszug, die für den Unterzeichner gespeichert sind, aufweisen.

3. Verfahren für graphometrische Unterschrift von Dokumenten nach einem oder mehr der Ansprüche 1 bis 2, wobei der Schritt der Verschlüsselung die folgenden Schritte aufweist:
- Aufteilung des Dokuments in mehrere Datenpakete;
- Verschlüsselung eines jeden der Datenpakete durch einen vordefinierten Verschlüsselungsalgorithmus;
- Senden von Datenpaketen in einem nicht-sequenziellen Modus.

4. Verfahren für graphometrische Unterschrift von Dokumenten nach Anspruch 3, wobei der Schritt des Sendens von Datenpaketen durch Senden der Datenpakete an einen einzigen Server durchgeführt wird.

5. Verfahren für graphometrische Unterschrift von Dokumenten nach Anspruch 3, wobei der Schritt des Sendens von Datenpaketen durch Senden der Datenpakete an mehrere separate Server durchgeführt wird.

6. Verfahren für graphometrische Unterschrift von Dokumenten nach einem oder mehr der Ansprüche 1 bis 5, das weiterhin den Schritt des Anwendens eines Zeitstempels auf die graphometrische Signatur nach dem Schritt des Verschlüsselns des Dokuments aufweist.

7. Verfahren für graphometrische Unterschrift von Dokumenten nach einem oder mehr der Ansprüche 1 bis 6, das weiterhin den Schritt des Anwenden eines Bildes auf das mit der graphometrischen Signatur versehene Dokument vor dem Schritt des Verschlüsselns des Dokuments oder vor dem Schritt des Anbringens der graphometrischen Signatur aufweist.

8. Computerprogramm, das einen Computercode aufweist, der, wenn er in einen Computer geladen wird, es dem Computer ermöglicht, die Schritte des Verfahrens für die graphometrische Unterschrift von Dokumenten gemäß einem oder mehr der Ansprüche 1 bis 7 auszuführen.

9. System zum graphometrischen Unterzeichnen von Dokumenten, das aufweist:
- eine mobile Datenverarbeitungseinrichtung, die zumindest versehen ist mit:
einer Gesichtserkennungseinrichtung, die für den Unterzeichnerauthentifizierungsschritt nach Anspruch 1 verwendet wird, einem Bildschirm für die Nutzer-Interaktion während der Schritte des Verfahrens in Anspruch 1, einer Einrichtung zur dynamischen Erfassung einer graphometrischen Unterschrift, einer lokalen Datenbank zum Speichern von Authentifizierungsmerkmalen und einer Maschine zur digitalen Authentifizierung zum Durchführung der Berechnungen im Zusammenhang mit dem Verfahren in Anspruch 1;
- zumindest einen Server, der mit zumindest einer zentralen Datenbank versehen und operativ mit der mobilen Datenverarbeitungseinrichtung verbunden ist;
wobei die Maschine zur digitalen Authentifizierung der mobilen Datenverarbeitungseinrichtung enthält:
ein Computerprogramm, das, wenn es geladen ist, es der mobilen Datenverarbeitungseinrichtung ermöglicht, alle Schritte des Verfahrens zur graphometrischen Signatur von Dokumenten gemäß einem oder mehr der Ansprüche 1 bis 7 auszuführen,
wobei die lokale Datenbank die Daten aufweist, die sich auf die vorab gespeicherten Merkmale der graphometrischen Signatur und auf die vorab gespeicherten Gesichtserkennungsidentifizierungszeichen des Unterzeichners beziehen, und
wobei die zentrale Datenbank die Daten aufweist, die sich auf die Authentifizierung des Unterzeichners der graphometrischen Unterschrift beziehen, und die mit der graphometrischen Signatur versehenen verschlüsselten Dokumente speichert.

## Revendications

1. Procédé mis en oeuvre par ordinateur pour la signature graphométrique de documents comprenant les étapes de:
- authentification d'un signataire pour ladite signature graphométrique ;
- accès à un document à signer en cas d'authentification positive dudit signataire ;
- authentification de la signature graphométrique dudit signataire ;
- apposition de la signature graphométrique dudit signataire sur ledit document à signer en cas d'authentification positive de la signature graphométrique et du signataire ;
- chiffrement du document pourvu de ladite signature graphométrique apposée ;
dans lequel ladite étape d'authentification de la signature graphométrique dudit signataire comprend les étapes de :
- acquisition de la signature graphométrique dudit signataire à l'aide d'un dispositif pour une acquisition dynamique de ladite signature graphométrique ;
- identification d'une ou plusieurs caractéristiques réelles de ladite signature graphométrique ;
- extraction des caractéristiques pré-mémorisées de ladite signature graphométrique depuis une base de données locale ;
- comparaison des caractéristiques réelles avec les caractéristiques pré-mémorisées de ladite signature graphométrique à l'aide d'un moteur d'authentification numérique ;
dans lequel ladite étape d'authentification dudit signataire comprend les étapes de
- acquisition en temps réel des identifiants de reconnaissance faciale réels dudit signataire à l'aide d'un dispositif de reconnaissance faciale ;
- extraction des identifiants de reconnaissance faciale pré-mémorisés dudit signataire depuis ladite base de données, dans lequel lesdits identifiants de reconnaissance faciale pré-mémorisés sont obtenus par numérisation par balayage d'une photo depuis un document d'identification dudit signataire ;
- comparaison desdits identifiants de reconnaissance faciale réels avec lesdits identifiants de reconnaissance faciale pré-mémorisés à l'aide dudit moteur d'authentification ;
dans lequel ladite base de données comprend les associations entre lesdites caractéristiques pré-mémorisées de ladite signature graphométrique et lesdits identifiants de reconnaissance faciale pré-mémorisés d'un ou plusieurs signataires, et
dans lequel ladite étape d'apposition de la signature graphométrique est réalisée si, dans ladite étape de comparaison dans ladite étape d'authentification de la signature graphométrique, lesdites caractéristiques réelles correspondent auxdites caractéristiques pré-mémorisées dudit signataire, et si, dans l'étape de comparaison dans ladite étape d'authentification de signataire, lesdits identifiants de reconnaissance faciale réels correspondent auxdits identifiants de reconnaissance faciale pré-mémorisés dudit signataire.

2. Procédé pour la signature graphométrique de documents selon la revendication 1, dans lequel les caractéristiques réelles de ladite signature graphométrique comprennent l'acquisition de la pression et/ou de la vitesse et/ou du trait dudit signataire et lesdites caractéristiques pré-mémorisées comprennent la pression et/ou la vitesse et/ou le trait mémorisés pour ledit signataire.

3. Procédé pour la signature graphométrique de documents selon l'une ou plus des revendications 1 à 2, dans lequel ladite étape de chiffrement comprend les étapes de
- division du document en une pluralité de paquets de données ;
- chiffrement de chacun des paquets de données à l'aide d'un algorithme de chiffrement prédéfini ;
- envoi de paquets de données en mode non séquentiel.

4. Procédé pour la signature graphométrique de documents selon la revendication 3, dans lequel ladite étape d'envoi de paquets de données est réalisée par envoi desdits paquets de données à un seul serveur.

5. Procédé pour la signature graphométrique de documents selon la revendication 3, dans lequel ladite étape d'envoi de paquets de données est réalisée par envoi desdits paquets de données à une pluralité de serveurs distincts.

6. Procédé pour la signature graphométrique de documents selon l'une ou plus des revendications 1 à 5, comprenant en outre l'étape d'application d'un horodatage à ladite signature graphométrique après ladite étape de chiffrement du document.

7. Procédé pour la signature graphométrique de documents selon l'une ou plus des revendications 1 à 6, comprenant en outre l'étape d'application d'une image audit document pourvu de ladite signature graphométrique avant l'étape de chiffrement du document ou avant ladite étape d'apposition de la signature graphométrique.

8. Programme informatique comprenant un code informatique qui, quand il est chargé dans un ordinateur, permet à l'ordinateur d'exécuter les étapes dudit procédé pour la signature graphométrique de documents selon l'une ou plus des revendications 1 à 7.

9. Système de signature graphométrique de documents comprenant :
- un dispositif de traitement de données mobile pourvu d'au moins : un dispositif de reconnaissance faciale utilisé pour ladite authentification de signataire dans la revendication 1, un écran pour une interaction avec l'utilisateur pendant les étapes dudit procédé dans la revendication 1, un dispositif pour une acquisition dynamique d'une signature graphométrique, une base de données locale pour mémoriser des caractéristiques d'authentification, et un moteur d'authentification numérique pour réaliser les calculs liés au procédé dans la revendication 1 ;
- au moins un serveur pourvu d'au moins une base de données centrale et en relation opérationnelle avec ledit dispositif de traitement de données mobile ;
dans lequel ledit moteur d'authentification numérique dudit dispositif de traitement de données mobile inclut un programme informatique qui, quand il est chargé, permet audit dispositif de traitement de données mobile d'exécuter toutes les étapes dudit procédé pour la signature graphométrique de documents selon l'une ou plus des revendications 1 à 7,
dans lequel ladite base de données locale comprend les données relatives auxdites caractéristiques pré-mémorisées de ladite signature graphométrique et auxdits identifiants de reconnaissance faciale pré-mémorisés dudit signataire, et
dans lequel ladite base de données centrale comprend les données relatives à ladite authentification du signataire de ladite signature graphométrique et mémorise les documents chiffrés pourvus de ladite signature graphométrique.
